# EUROPÄISCHE PATENTANMELDUNG

(11) **EP 3 819 017 A1**
(43) Veröffentlichungstag der Anmeldung: **12.05.2021**
(21) Anmeldenummer: 19208271.7
(22) Anmeldetag: 11.11.2019
(51) Int. Cl.: B01D 53/88, B01J 19/12, H01L 31/04

(54) **PHOTOKATALYSEMODUL**

(71) Anmelder: Siemens Aktiengesellschaft, 80333 München (DE)
(72) Erfinder: Fleischer, Maximilian, 85635 Höhenkirchen (DE); Pohle, Roland, 85570 Herdweg (DE); Simon, Elfriede, 80639 München (DE); von Sicard, Oliver, 81541 München (DE)

(57) **Zusammenfassung**

Die Erfindung betrifft ein Photokatalysemodul (10), das eine Reaktionskammer (11) mit einem Einlass (111) und einem Auslass (112) und ein sich in der Reaktionskammer (111) befindliches photoaktives Material (12) aufweist. Das photoaktive Material (12) weist einen photoaktiven Katalysator auf, der bei Absorption von Photonen, deren Energie einen bestimmten Schwellwert erreichen oder übertreffen, eine photoassistierte katalytische Reaktion in Gang setzt. Das Photokatalysemodul (10) ist dadurch gekennzeichnet, dass es ferner ein Photovoltaikmodul (13)zur Umwandlung elektromagnetischer Strahlung der Sonne in eine elektrische Spannung und eine Lichtquelle (14) aufweist. Die Lichtquelle (14) ist dabei imstande, überwiegend Photonen zu emittieren, deren Energie mindestens so groß wie der genannte Schwellwert ist. Das Photokatalysemodul (10) ist so ausgestaltet, dass die Lichtquelle (14) mit der durch das Photovoltaikmodul (13) erzeugten elektrischen Spannung betreibbar ist und das photoaktive Material (12) und die Lichtquelle (14) so zueinander platziert sind, dass die emittierten Photonen der Lichtquelle (14) auf den photoaktiven Katalysator treffen können.

## Beschreibung

Die vorliegende Erfindung betrifft ein Photokatalysemodul zur Umwandlung eines Ausgangsstoff in ein Reaktionsprodukt. Die Erfindung betrifft im Speziellen ein Photokatalysemodul, bei dem mittels einer photoassistierten katalytischen Reaktion ein Ausgangsstoff in ein Reaktionsprodukt umgewandelt wird.

Unter Photokatalyse wird allgemein jede durch Licht ausgelöste chemische Reaktion verstanden. Ein bekanntes Beispiel aus der Natur ist die Photosynthese der Pflanzen. Hierbei wird durch Absorption von Photonen des Sonnenlichts mittels einer katalytischen Reaktion Kohlendioxid und Wasser zu Sauerstoff und Kohlenhydraten umgewandelt.

Industriell wird als Katalysator oftmals der Halbleiter Titandioxid verwendet. Trifft Licht auf Titandioxid, werden dann Elektron-Loch-Paare erzeugt, wenn die Energie der auftreffenden Photonen gleich groß oder größer als die Bandlücke von Titandioxid ist. Dies wird als innerer photoelektrischer Effekt bezeichnet. Die Elektronen und Löcher können im Titandioxid an die Oberflächen diffundieren und dort Radikale erzeugen, die zur Zersetzung organischer Substanzen führen. Ein Beispiel für eine mögliche photokatalytische Reaktion mit Titandioxid als Katalysator ist die Umwandlung der Ausgangsstoffe Wasser und organischer Substanzen in Kohlenstoffdioxid und Wasser.

Eine Voraussetzung für die Aktivierung des Katalysators ist, dass die Energie des auftreffenden Photons mindestens so groß wie die Bandlücke des Katalysators ist. Im Fall von Titandioxid beträgt die Bandlücke 3,0 eV (entspricht einer Wellenlänge von 413 nm), wenn sich das Titandioxid in der Kristallstruktur Rutil befindet, bzw. 3,2 eV (387 nm), wenn es sich in der Kristallstruktur Anatas befindet.

Nur ein kleiner Anteil der Photonen der Solarstrahlung, die auf die Erdoberfläche auftrifft, hat eine Energie von 3,0 eV oder mehr. Dies hat zur Folge, dass nur ein kleiner Teil der Sonnenenergie zur Photokatalyse genutzt werden kann, falls Titandioxid oder andere Katalysatoren mit vergleichbar großer Bandlücke verwendet werden.

Um trotz der geringen Aktivierungsrate des Katalysators durch Sonnenlicht einen ausreichend großen Stoffumsatz zu erreichen, wird herkömmlicherweise die Katalysatorfläche, also die Fläche, die mit den Katalysatoren bedeckt ist, groß ausgelegt. Dies hat jedoch den Nachteil eines hohen Flächenbedarfs und hoher Materialkosten.

Es besteht somit der Wunsch nach einem Photokatalysemodul, das dazu imstande ist, effizienter als bisher mithilfe der Energie des einfallenden Sonnenlichts einen Ausgangsstoff in ein Reaktionsprodukt umzuwandeln.

Anspruch 1 der vorliegenden Anmeldung spezifiziert ein Photokatalysemodul, das diesen Wunsch erfüllt. Vorteilhafte Varianten und Weiterbildungen sind in den abhängigen Ansprüchen, der Beschreibung und den Abbildungen offenbart.

Das erfindungsgemäße Photokatalysemodul weist eine Reaktionskammer mit einem Einlass und einem Auslass sowie ein sich in der Reaktionskammer befindliches photoaktives Material auf. Das photoaktive Material umfasst einen photoaktiven Katalysator, der bei Absorption von Photonen, deren Energie einen bestimmten Schwellwert erreichen oder übertreffen, eine photoassistierte katalytische Reaktion in Gang setzt. Das Photokatalysemodul weist ferner ein Photovoltaikmodul zur Umwandlung elektromagnetischer Strahlung der Sonne in elektrische Energie sowie eine Lichtquelle auf. Die Lichtquelle ist imstande, überwiegend Photonen zu emittieren, deren Energie mindestens so groß wie der genannte Schwellwert ist. Das Photokatalysemodul ist ferner so ausgestaltet, dass die Lichtquelle mit der von dem Photovoltaikmodul erzeugten elektrischen Energie betreibbar ist und das photoaktive Material und die Lichtquelle so zueinander platziert sind, dass die emittierten Photonen der Lichtquelle auf den photoaktiven Katalysator treffen können.

Die Erfinder haben erkannt, dass photoaktive Katalysatoren in der Regel nur einen sehr kleinen, hochenergetischen Anteil des Solarspektrums nutzen können, Solarzellen dagegen einen großen spektralen Anteil des Solarspektrums absorbieren und in elektrische Energie umwandeln können. Der Kern der Erfindung besteht darin, mittels eines Photovoltaikmoduls einen großen spektralen Anteil der elektromagnetischen Strahlung der Sonne in elektrische Energie umzuwandeln und damit eine Lichtquelle zu betreiben, die Photonen mit einer auf den photoaktiven Katalysator abgestimmten Energie emittiert. Konkret soll die Energie der von der Lichtquelle emittierten Photonen mindestens so groß sein, um die photoaktiven Katalysatoren zu aktivieren und eine photoassistierte katalytische Reaktion in Gang zu setzen. Die Energie der auf das erfindungsgemäße Photokatalysemodul einfallenden Solarstrahlung ist dann effizienter als im Stand der Technik genutzt, wenn die Menge an von der Lichtquelle des erfindungsgemäßen Photokatalysemodul emittierten und für den Katalysator nutzbarer Photonen größer als die Menge an von der Solarstrahlung direkt auf den Katalysator fallender und für den Katalysator nutzbarer Photonen ist.

Die vorliegende Erfindung adressiert den Nachteil der großen Fläche, den herkömmliche Photokatalysemodule benötigen, um einen vorgegebenen Stoffumsatz (also eine vorgegebene Menge an umgewandelten Ausgangsstoff) zu erreichen, und überwindet ihn. Denn aufgrund der erhöhten Effizienz eines mit einem Photovoltaikmodul und einer davon betriebenen Lichtquelle ausgestatteten Photokatalysemodul ist eine deutlich geringere Fläche, die das optisch aktive Material einnimmt, nötig.

Unter einem "überwiegendem" Anteil an Photonen mit einer Energie, die mindestens so groß wie der Schwellwert ist, wird ein Anteil von mehr als 50% der gesamt von der Lichtquelle emittierten Photonen verstanden. Insbesondere ist damit ein Anteil von mindestens 80%, vorzugsweise mindestens 90%, der von der Lichtquelle emittierten Photonen umfasst. Unter dem Schwellwert ist hierbei diejenige Energie gemeint, die ein Photon mindestens aufweisen muss, um den Katalysator zu aktivieren, das heißt, um die photoassistierte katalytische Reaktion in Gang zu setzen.

Der Effekt davon ist, dass ein überwiegender Teil der von der Lichtquelle emittierten Photonen in der Lage ist, den Katalysator zu aktivieren (in anderen Worten: anzuregen). Dies ist bei einem direkt von Solarstrahlung bestrahlten Katalysator nicht der Fall. Hier ist nur ein (sehr) kleiner Teil der auftreffenden Photonen in der Lage, den Katalysator anzuregen.

Wenn ein überwiegender Teil der von der Lichtquelle emittierten Photonen in der Lage ist, den Katalysator anzuregen, gibt es relativ wenig "ungenutzte" Photonen. Dies hat den Vorteil, dass Thermalisierungseffekte oder andere unerwünschte Effekte im photoaktiven Material reduziert werden.

In einer vorteilhaften Ausführungsform der Erfindung emittiert die Lichtquelle überwiegend Photonen, deren Energie höchstens 10%, vorzugsweise höchstens 5%, über dem Schwellwert liegt.

Unter dem "überwiegendem" Anteil der Photonen, deren Energie höchstens 10%, vorzugsweise höchstens 5%, über dem Schwellwert liegt, ist gemeint, dass mehr als die Hälfte der von der Lichtquelle emittierten Photonen eine Energie innehaben, die kleiner oder gleich 10%, respektive 5%, über dem Schwellwert liegt.

Ein Zahlenbeispiel soll dies verdeutlichen: Der Schwellwert, ab dem der Katalysator durch ein Photon aktiviert wird, sei 3,0 eV. Erfindungsgemäß emittiert die Lichtquelle des Photokatalysemoduls überwiegend (in anderen Worten: mehrheitlich) Photonen mit einer Energie von 3,0 eV oder mehr. In einer vorteilhaften Ausführungsform der Erfindung emittiert die Lichtquelle Photonen in einem engen Energiebereich: Sie emittiert nämlich mehrheitlich Photonen, die eine Energie zwischen 3,0 eV und 3,3 eV (3,3 eV = Schwellwert 3,0 eV + 10% des Schwellwerts) innehaben.

Ein Effekt davon, dass die Photonen überwiegend eine Energie haben, die nicht viel größer als der Schwellwert ist, besteht darin, dass wenig Thermalisierung in dem photoaktiven Material auftritt, da die Photonenenergie möglichst vollständig bei der Aktivierung des Katalysators "verbraucht" wird. Anders ausgedrückt, wird die Wellenlänge des von der Lichtquelle emittierten Spektrums der Aktivierungsenergie des Katalysators angepasst.

In einer vorteilhaften Ausführungsform der Erfindung weist das Photovoltaikmodul eine Vorderseite, die für die Beaufschlagung mit Sonnenlicht vorgesehen ist, und eine ihr gegenüberliegende Rückseite auf, wobei die Lichtquelle auf der Rückseite des Photovoltaikmoduls angeordnet ist.

Dies ermöglicht eine kompakte, integrierte Bauweise des Photokatalysemoduls.

Vorteilhafterweise nimmt die Lichtquelle zumindest teilweise eine Wand der Reaktionskammer ein.

Durch die Integration des Photovoltaikmoduls in das Photokatalysemodul ergeben sich mehrere aus Kostensicht positive Synergieeffekte: Es kann ein gemeinsamer Rahmen für das Photovoltaikmodul, die Lichtquelle und die Reaktionskammer mit dem photoaktiven Material konstruiert werden. Die genannten Komponenten können definiert und stabil zueinander platziert werden, so dass das Photokatalysemodul als Ganzes an Robustheit gewinnt. Der Platzbedarf des integrierten Photokatalysemodul wird überdies minimiert.

Die Lichtquelle umfasst vorteilhafterweise eine flächige Anordnung lichtemittierender Dioden (LED's). Eine solche Anordnung lichtemittierender Dioden wird auch als LED-Array bezeichnet.

Ein LED-Array als Lichtquelle hat den Vorteil, dass auch eine große Fläche photoaktiven Materials homogen beleuchtet (in anderen Worten: bestrahlt) werden kann. Dies ist mit herkömmlichen Glühlampen ohne entsprechende Optiken in der Regel nicht möglich. Des Weiteren lässt sich die Energie der von einer LED emittierten Photonen relativ einfach und spezifisch einstellen. Schließlich sind LED's vergleichsweise energiesparend im Betrieb und kostengünstig in der Anschaffung.

In einer weiteren Ausführungsform der Erfindung nimmt die Lichtquelle zumindest teilweise eine Wand der Reaktionskammer ein.

Das Photokatalysemodul ist, wie schon erwähnt, so ausgestaltet, dass das photoaktive Material und die Lichtquelle so zueinander platziert sind, dass die emittierten Photonen der Lichtquelle auf den photoaktiven Katalysator treffen können.

Dies lässt sich konkret in vorteilhafter Weise so realisieren, dass die Lichtquelle gegenüber dem photoaktiven Material angeordnet ist. Der Abstand zwischen der Lichtquelle und dem photoaktiven Material ist in Abhängigkeit von der Homogenität der Abstrahlcharakteristik der Lichtquelle und dem Platz, den die Ausgangsstoffe zur Absorption durch das photoaktive Material benötigen, zu wählen.

Das photoaktive Material kann beispielsweise auf einer Seite der Reaktionskammer angeordnet sein. Dies hat den Vorteil, dass das Photokatalysemodul robust und platzsparend konstruiert werden kann.

In einer Ausführungsform der Erfindung ist die Seite der Reaktionskammer, auf der das photoaktive Material angeordnet ist, als Membran ausgestaltet.

In einer anderen Ausführungsform der Erfindung ist die Seite der Reaktionskammer, auf der das photoaktive Material angeordnet ist, als Gasdiffusionselektrode ausgestaltet.

Vorteilhafterweise ist das photoaktive Material flächig angeordnet.

Das photoaktive Material kann als photoaktiven Katalysator Titandioxid umfassen. Titandioxid hat sich als geeigneter Katalysator für das Initiieren photoassistierter katalytischer Reaktionen erwiesen.

Titandioxid kann beispielsweise in der Modifikation Anatas oder Rutil als photoaktiver Katalysator verwendet werden. Die Bandlücke von Anatas liegt bei 3,2 eV; die Bandlücke von Rutil bei 3,0 eV. Je nachdem, welcher Katalysator verwendet wird, wird vorteilhafterweise eine Lichtquelle verwendet, die überwiegend Photonen mit der Energie 3,2 eV bzw. 3,0 eV emittiert.

Das Photovoltaikmodul weist üblicherweise mehrere Solarzellen auf. Wenn die Solarzellen in Reihe geschaltet werden, reicht in der Regel die generierte Spannung bzw. die damit verbundene elektrische Leistung aus, um die Lichtquelle, insbesondere einen LED-Array, direkt zu betreiben. Sollte dennoch die von dem Photovoltaikmodul erzeugbare elektrische Spannung nicht für den Betrieb der Lichtquelle ausreichen, kann beispielsweise ein Gleichspannungswandler (DC-DC-Wandler) zwischengeschaltet werden.

Die Lichtquelle muss erfindungsgemäß mit der Spannung des Photovoltaikmoduls (unter Umständen unter Zuhilfenahme eines etwaigen Gleichspannungswandlers) betreibbar sein. Das Photokatalysemodul kann aber zusätzlich Mittel vorsehen, dass die Lichtquelle wahlweise auch mit einer externen Spannung betrieben werden kann. Dies erhöht die Betriebssicherheit des Photokatalysemoduls, denn es kann somit - bei vorhandener externer Spannungsversorgung - im Falle eines Defekts oder eines nicht mit Sonnenlicht beaufschlagten Photovoltaikmoduls die Umwandlung des Ausgangsstoffs in das Reaktionsprodukt durchgeführt werden.

Je nach Anwendung können die Gasreaktionskammern in Serie oder parallel geschaltet werden. Die Reihenschaltung ermöglicht es, mehrere verschiedene photoassistierte katalytische Reaktionen nacheinander ablaufen zu lassen.

Schließlich kann die Abmessung der Reaktionskammer mit Abstandshaltern an die Reaktionsgeschwindigkeit der beteiligten Stoffe, insbesondere der Gase, angepasst werden.

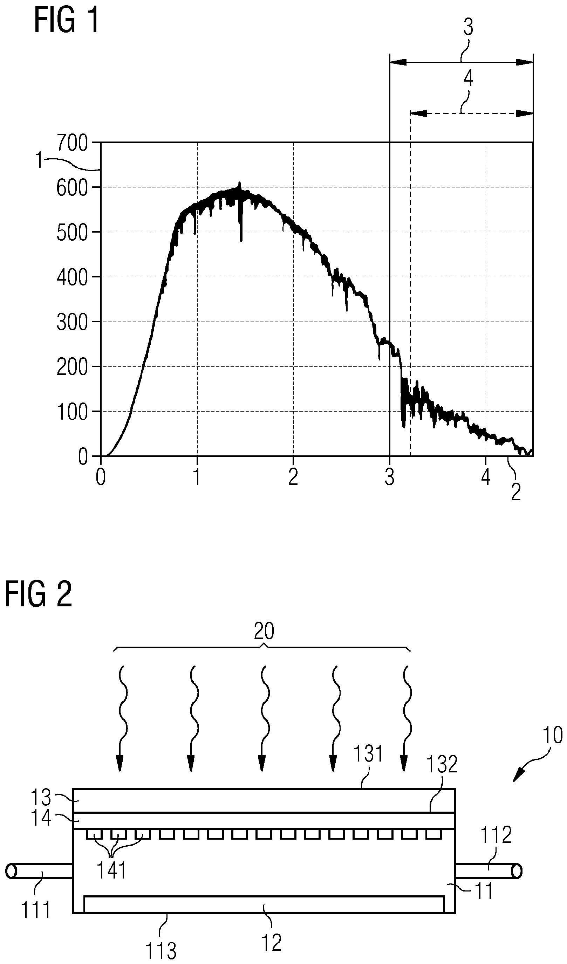

Nachfolgend wird die Erfindung anhand der beigefügten Abbildungen veranschaulicht. Die Abbildung 2 zeigt beispielhaft und schematisch eine ausgewählte Ausführungsform ohne Beschränkung des beanspruchten Schutzumfangs.

Die Abbildungen zeigen:
- Fig. 1:: die spektrale Bestrahlungsstärke der Solarstrahlung für AM = 1,5; und
- Fig. 2:: ein Ausführungsbeispiel für ein erfindungsgemäßes Photokatalysemodul.

Die Abbildung 1 (auch als Fig. 1 bezeichnet) zeigt das Spektrum der von der Sonne emittierten elektromagnetischen Strahlung, wie es bei schrägem Einfall auf der Erdoberfläche gemessen werden kann. Im Speziellen ist das als Standard für die Vermessung von Photovoltaikmodulen verwendete Spektrum AM = 1,5 gezeigt, wie es in der Norm IEC 904-3 (1989) Teil III definiert ist.

Auf der Ordinate ist die spektrale Bestrahlungsstärke 1 in Watt pro Quadratmeter und Elektronenvolt [W/m²eV], auf der Abszisse 2 die Energie der Photonen in Elektronenvolt [eV] aufgetragen. Wie zu sehen ist, haben nur ein relativ kleiner Teil der Photonen des AM = 1,5 Spektrums eine Energie von 3,2 eV oder mehr. Wird also beispielsweise Titandioxid in der Modifikation Anatas mit der Bandlücke 3,2 eV als Katalysator verwendet, welches ein für die Photokatalyse sehr effizienter Katalysator ist, kann nur ein sehr kleiner Bereich 4 der Solarstrahlung zur Aktivierung des Katalysators genutzt werden. Selbst bei einer Verwendung der weniger effizienten Kristallstruktur Rutil mit einer Bandlücke von 3,0 eV ist der Bereich 3 des Spektrums, der für die Photokatalyse nutzbar ist, klein.

Nur ca. 3% der Photonen des Spektrums AM = 1,5 haben eine Energie von mehr als 3 eV. Trifft die elektromagnetische Strahlung der Sonne direkt auf das photoaktive Material, können nur 3% der auftreffenden Photonen zur Aktivierung der im photoaktiven Material enthaltenen Katalysatoren verwendet werden (sofern Anatas oder Rutil als Katalysator eingesetzt werden). Die restlichen 97% der Photonen sind für die Photokatalyse nicht verwertbar.

Die Ausbeute, das heißt Effizienz, des erfindungsgemäßen Photokatalysemoduls ist, verglichen damit, besser. Die Abbildung 2 (auch als Fig. 2 bezeichnet) zeigt beispielhaft und schematisch eine mögliche Ausführungsform der Erfindung. Sie zeigt ein Photokatalysemodul 10, das eine Reaktionskammer 11, ein photoaktives Material 12, ein Photovoltaikmodul 13 und eine Lichtquelle 14 umfasst.

Das Photovoltaikmodul 13 weist eine Vorderseite 131 und eine Rückseite 132 auf. Die Vorderseite 132 ist diejenige Seite des Photovoltaikmoduls 13, die zur Beaufschlagung elektromagnetischer Strahlung 20 der Sonne vorgesehen ist. Das Photovoltaikmodul 13 umfasst beispielsweise mehrere Solarzellen. Dabei kann es sich zum Beispiel um kristalline Silicium-Solarzellen, Dünnschichtsolarzellen oder Perovskit-Solarzellen handeln. Mehrfachzellen (engl. *multi-junction solar cells*) einschließlich Tandem-Solarzellen stellen ebenfalls eine attraktive Option dar.

Eine Solarzelle ist in der Regel imstande, einen signifikanten Spektralbereich der Solarstrahlung zu absorbieren, um Elektron-Loch-Paare zu erzeugen und damit eine elektrische Spannung zu generieren. Heutige kristalline Silicium-Solarzellen erreichen gewöhnlicherweise um die 20% Photokonversionseffizienz (in anderen Worten: Wirkungsgrad). Das heißt, ca. 20% der Energie der auf die Solarzelle (bzw. das Photovoltaikmodul) auftreffenden Solarstrahlung wird in elektrische Energie umgewandelt. Für Tandemsolarzellen aus einer Perovskit- und einer kristallinen Silicium-Solarzelle werden sogar ein Wirkungsgrad von bis zu 30% prognostiziert.

Die von dem Photovoltaikmodul 13 erzeugte elektrische Energie (bzw. anders ausgedrückt, die erzeugte elektrische Spannung oder Leistung) kann erfindungsgemäß verwendet werden, um die Lichtquelle 14 zu betreiben. In dem in Abbildung 2 gezeigten Beispiel handelt es sich bei der Lichtquelle 14 um ein Array aus einer Vielzahl lichtemittierender Dioden (LED's) 141, von denen der Übersicht halber in Abbildung 2 nur drei LED's mit Bezugszeichen 141 versehen sind. Das LED-Array ist auf der Rückseite 132 des Photovoltaikmoduls 13 angeordnet. Dies erlaubt einen platzsparenden, kompakten Aufbau und einen kurzen Weg für die Verkabelung des LED-Arrays mit dem Photovoltaikmodul 13.

Die lichtemittierenden Dioden 141 sind so angeordnet, dass sie primär in die Richtung abstrahlen, in der sich auch das photoaktive Material 12 mit den photoaktiven Katalysatoren befindet. Dabei ist es vorteilhaft, wenn die gesamte Fläche, die von dem photoaktiven Material 12 bedeckt wird, möglichst homogen von elektromagnetischer Strahlung der Lichtquelle 14 beaufschlagt wird. Außerdem müssen die von der Lichtquelle 14 emittierten Photonen "geometrisch" in der Lage sein, die sich in dem photoaktiven Material 12 befindlichen photoaktiven Katalysatoren zu erreichen. Dies möglichst ohne Einbußen, was z.B. dadurch erreicht werden kann, dass die Lichtquelle 14 und das photoaktive Material 12 gegenüberliegend angeordnet sind (wie beispielhaft in Abbildung 2 realisiert).

Vorteilhafterweise emittiert die Lichtquelle 14 Photonen mit einer Energie, die der Bandlücke des photoaktiven Materials 12 entspricht oder um ein wenig übertrifft. Dies hat einerseits den Effekt, dass möglichst viele Photonen (im Idealfall, alle Photonen), die von der Lichtquelle 14 emittiert werden, die für die Aktivierung des photoaktiven Materials 12 bzw. der darin enthaltenen Katalysatoren notwendige Energie aufweisen. Andererseits sind die Thermalisierungseffekte im photoaktiven Material 12 gering, da die Energie der absorbierten Photonen die zur Erzeugung eines Elektron-Loch-Paars notwendige Energie nur um wenig übertrifft.

Eine Lichtquelle 14, die dies in vorteilhafter Weise leisten kann, ist eine lichtemittierende Diode. Um eine räumliche Homogenität der Beleuchtung des photoaktiven Materials 12 zu erreichen, kann vorteilhafterweise ein LED-Array verwendet werden.

Die Reaktionskammer 11 weist einen Einlass 111 und einen Auslass 112 auf. Der Ausgangsstoff tritt über den Einlass 111 in die Reaktionskammer 11 ein. Es kann sich bei dem Ausgangsstoff insbesondere um ein erstes Gas oder Gasgemisch handeln. In diesem Fall strömt das Gas über den Einlass 111 in die Reaktionskammer 11, um anschließend in Kontakt mit dem photoaktiven Material 12 zu kommen. Dort findet photoassistierte katalytische Reaktion statt, bei der der Ausgangsstoff in ein oder mehrere Reaktionsprodukte umgewandelt werden. Das Reaktionsprodukt kann gasförmig oder flüssig sein oder sowohl eine gasförmige als auch eine flüssige Komponente aufweisen. Die Reaktionskammer 11 ist so ausgestaltet, dass sie einen Auslass 112 aufweist, aus dem das Reaktionsprodukt aus der Reaktionskammer 11 austreten kann.

In Abbildung 2 sind Einlass 111 und Auslass 112 an den beiden Seitenwänden der Reaktionskammer 11 realisiert. Alternativ ist es auch möglich, dass die Seite 113 der Reaktionskammer 11, auf der das photoaktive Material 12 angeordnet ist, für das Reaktionsprodukt durchlässig ist. Die Seite der Reaktionskammer, auf der das photoaktive Material 12 angeordnet ist, kann beispielsweise als Membran oder als Gasdiffusionselektrode ausgestaltet sein. In diesem Fall wäre der Austritt für die Reaktionsprodukte sinnvollerweise auf der Seite, auf der sich die Membran bzw. die Gasdiffusionselektrode befindet, anzuordnen.

Wie oben bereits erwähnt, können in einem herkömmlichen Photokatalysemodul mit Anatas oder Rutil als Katalysator nur ca. 3% der auftreffenden Photonen zur Aktivierung der im photoaktiven Material enthaltenen Katalysatoren verwendet werden. Die restlichen 97% der Photonen sind für die Photokatalyse nicht verwertbar. In dem erfindungsgemäßen Photokatalysemodul können ca. 20% der Energie der auf das Photovoltaikmodul auftreffenden Solarstrahlung in elektrische Energie umgewandelt werden, wenn konventionelle Silicium-Solarzellen im Photovoltaikmodul verwendet werden. Unter der Annahme, dass als Lichtquelle eine herkömmliche LED verwendet wird, die Photonen mit der Energie 3,2 eV emittiert, und dass 20% der elektrischen Energie, die zum Betrieb der LED aufgewendet wird, als Photonen mit der Energie 3,2 eV emittiert werden, ergibt sich als Ergebnis, dass 4% der Energie der Solarstrahlung zur Aktivierung der im photoaktiven Material enthaltenen Katalysatoren verwendet werde können. Wird ein Photovoltaikmodul mit einem hohen Wirkungsgrad von z.B. 30% verwendet, erhöht sich die Effizienz des Photokatalysemoduls auf 6%.

Zusammenfassend offenbart die vorliegende Patentanmeldung ein Photokatalysemodul, das dazu imstande ist, effizienter als bisher mithilfe der Energie des einfallenden Sonnenlichts einen Ausgangsstoff mittels photoassistierter katalytischer Reaktion in ein Produkt umzuwandeln.

## Patentansprüche

1. Photokatalysemodul (10), umfassend
- eine Reaktionskammer (11) mit einem Einlass (111) und einem Auslass (112), und
- ein sich in der Reaktionskammer (111) befindliches photoaktives Material (12) mit einem photoaktiven Katalysator, der bei Absorption von Photonen, deren Energie einen bestimmten Schwellwert erreichen oder übertreffen, eine photoassistierte katalytische Reaktion in Gang setzt,
**dadurch gekennzeichnet, dass**
das Photokatalysemodul (10) ferner
- ein Photovoltaikmodul (13) zur Umwandlung elektromagnetischer Strahlung der Sonne in elektrische Energie und
- eine Lichtquelle (14) aufweist, wobei die Lichtquelle (14) imstande ist, überwiegend Photonen zu emittieren, deren Energie mindestens so groß wie der genannte Schwellwert ist,
wobei das Photokatalysemodul (10) so ausgestaltet ist, dass
- die Lichtquelle (14) mit der durch das Photovoltaikmodul (13) erzeugten elektrischen Energie betreibbar ist und
- das photoaktive Material (12) und die Lichtquelle (14) so zueinander platziert sind, dass die emittierten Photonen der Lichtquelle (14) auf den photoaktiven Katalysator treffen können.

2. Photokatalysemodul (10) nach Anspruch 1,
wobei die Lichtquelle (14) überwiegend Photonen emittiert, deren Energie höchstens 10%, vorzugsweise höchstens 5%, über dem Schwellwert liegt.

3. Photokatalysemodul (10) nach einem der vorhergehenden Ansprüche,
wobei das Photovoltaikmodul (13) eine Vorderseite (131), die für die Beaufschlagung mit Sonnenlicht vorgesehen ist, und eine ihr gegenüberliegende Rückseite (132) aufweist, und die Lichtquelle (14) auf der Rückseite (132) des Photovoltaikmoduls (13) angeordnet ist.

4. Photokatalysemodul (10) nach einem der vorhergehenden Ansprüche,
wobei die Lichtquelle (14) eine flächige Anordnung lichtemittierender Dioden (141) umfasst.

5. Photokatalysemodul (10) nach einem der vorhergehenden Ansprüche,
wobei die Lichtquelle (14) zumindest teilweise eine Wand der Reaktionskammer (11) einnimmt.

6. Photokatalysemodul (10) nach einem der vorhergehenden Ansprüche,
wobei die Lichtquelle (14) gegenüber dem photoaktiven Material (12) angeordnet ist.

7. Photokatalysemodul (10) nach einem der vorhergehenden Ansprüche,
wobei das photoaktive Material (12) auf einer Seite (113) der Reaktionskammer (11) angeordnet ist.

8. Photokatalysemodul (10) nach Anspruch 7,
wobei die Seite (113) der Reaktionskammer (11), auf der das photoaktive Material (12) angeordnet ist, als Membran ausgestaltet ist.

9. Photokatalysemodul (10) nach Anspruch 7,
wobei die Seite (113) der Reaktionskammer (11), auf der das photoaktive Material (12) angeordnet ist, als Gasdiffusionselektrode ausgestaltet ist.

10. Photokatalysemodul (10) nach einem der vorhergehenden Ansprüche,
wobei das photoaktive Material (12) flächig angeordnet ist.

11. Photokatalysemodul (10) nach einem der vorhergehenden Ansprüche,
wobei der photoaktive Katalysator Titandioxid umfasst.

12. Photokatalysemodul (10) nach einem der vorhergehenden Ansprüche,
wobei der Schwellwert der Energie der von der Lichtquelle emittierten Photonen 3,0 eV beträgt.

13. Photokatalysemodul (10) nach einem der vorhergehenden Ansprüche,
wobei der Schwellwert der Energie der von der Lichtquelle emittierten Photonen 3,2 eV beträgt.
